# EUROPEAN PATENT SPECIFICATION

(11) **EP 1 450 572 B1**
(45) Date of publication and mention of the grant of the patent: **12.10.2005**
(21) Application number: 03290364.3
(22) Date of filing: 14.02.2003
(51) Int. Cl.: H04Q 7/30

(54) **A mobile communication base station apparatus and a baseband processing section**
Mobilfunkbasisstation und Basisbandverarbeitungsteil
Station de base dans une système de communication mobile et partie de traitement bande de base

(43) Date of publication of application: 25.08.2004
(73) Proprietor: Evolium S.A.S., 75008 Paris (FR)
(72) Inventor: Lange, Keld, Dr., 75443 Ötisheim (DE)
(74) Representative: Brose, Gerhard

(56) References cited:
- EP-A- 0 652 644
- WO-A-00/25440
- GB-A- 2 315 622
- US-A1- 2002 141 512
- US-B1- 6 400 966

## Description

### Field of the Invention

The present invention relates to a mobile communication base station apparatus, in particular to a scalable W-CDMA NODE-B System, and a baseband processing section.

A mobile communication base station with a radio channel setting control is e.g. known from US Patent Application No. 5,889,769. The establishment of virtual connections passing through a multi-stage switching system is known from the US Patent Application No. 4,907,220.

The invention is based on a mobile communication base station apparatus comprising a plurality of radio transmission and/or reception sections and a plurality of baseband processing sections comprising a user data stream interface, where each radio transmission and/or reception section is connected to at least one baseband processing section, known from the US Patent Application Publication No. US 2002/0141512 A1. The Patent Application discloses a process for baseband processing in baseband board units of a base station, where baseband processing is assigned to a processing element of a baseband board unit according to the utilization of the processing element. The UK Patent Application GB 2 315 622 A discloses transmission device for use in a base station compensating a failure of an amplifier in a transmitter by increasing the baseband signal. Universal Mobile Telecommunication system (UMTS) addresses the growing demand of mobile and Internet applications for new capacity in the overcrowded mobile communications sky. The new network increases transmission speed to 2 Mbps per mobile user and establishes a global roaming standard.

The main characteristics of 3G systems are: Used worldwide, Used for all mobile applications, support both packet-switched (PS) and circuit-switched (CS) data transmission, and offer high data rates up to 2 Mbps (depending on mobility/velocity) and a high spectrum efficiency.

One of the most significant changes is the new UMTS terrestrial radio access (UTRA), a wide-band code division multiple access (W-CDMA) radio interface for land-based communications. UTRA supports time division duplex (TDD) and frequency division duplex (FDD).

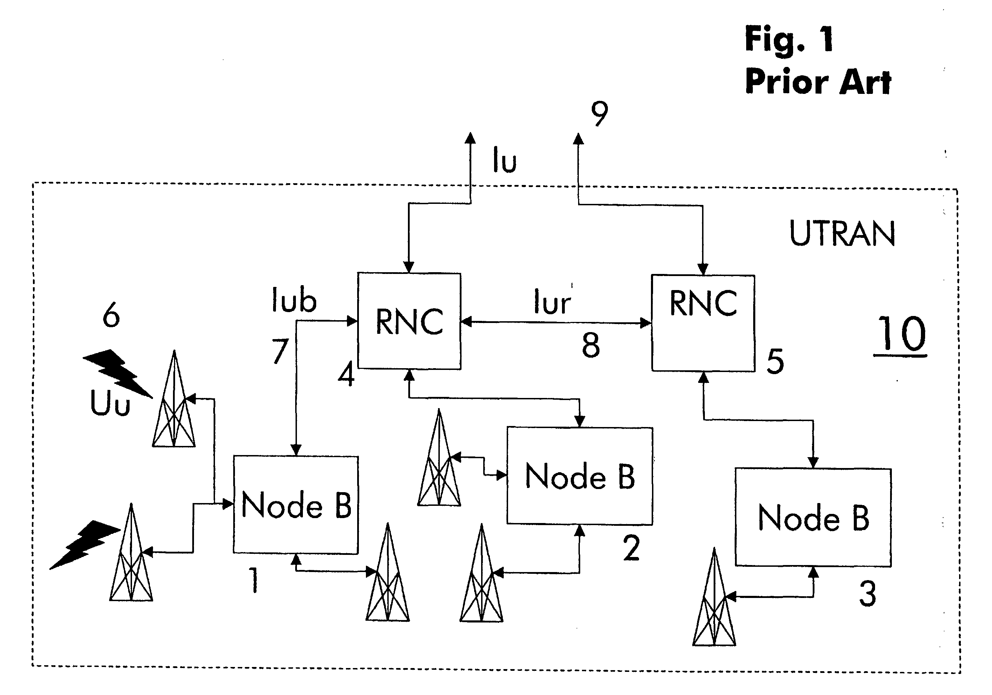

In UMTS release 1, a new radio access network UMTS terrestrial radio access network (UTRAN) is introduced, shown in figure 1. UTRAN, the UMTS radio access network (RAN), is connected via the lu to the Global System for Mobile Communications (GSM) Phase 2+ core network (CN). The 'lu' is the UTRAN interface between the radio network controller (RNC) and CN.

Two network elements are introduced in UTRAN, RNC, and node B. UTRAN is subdivided into individual radio network systems (RNSs), where each RNS is controlled by an RNC. The RNC is connected to a set of node B elements, each of which can serve one or several cells. Node B is the physical unit for radio transmission/reception with cells. Depending on sectoring, one or more cells may be served by a node B. Node B collects with the UE via the W-CDMA Uu radio interface and with the RNC via the lub asynchronous transfer mode (ATM)-based interface. Node B is the ATM termination point.

The main task of node B is the conversion of data to and from the Uu radio interface, including forward error correction (FEC), rate adaptation, W-CDMA spreading/de-spreading, and quadrature phase shift keying (QPSK) modulation on the air interface.

W-CDMA can support mobile/portable voice, images, data, and video communications at up to 2 Mbps (local area access) or 384 Kbps (wide area access). The input signals are digitized and transmitted in coded, spread-spectrum mode over a broad range of frequencies. A 5 MHz-wide carrier is used, compared with 200 kHz-wide carrier for narrow-band CDMA.

CDMA uses unique spreading codes to spread the baseband data, i.e., the original band of frequencies, before transmission. The signal is transmitted in a channel, which is below noise level. The receiver then uses a correlator to de-spread the wanted signal, which is passed through a narrow band-pass filter. Unwanted signals will not be de-spread and will not pass through the filter. Codes take the form of a carefully designed one/zero sequence produced at a much higher rate than that of the baseband data. The rate of a spreading code is referred to as chip rate rather than bit rate.

W-CDMA uses Direct Sequence spreading, where spreading process is done by directly combining the baseband information to high chip rate binary code. The Spreading Factor is the ratio of the chips (UMTS = 3.84Mchips/s) to baseband information rate. Spreading factors vary from 4 to 512 in FDD UMTS.

As illustrated above through multiple UMTS requirements the major challenge is the tight adaptation of the radio transmitter on the data streams to be transmitted. The encoding and decoding according to W-CDMA requires a tight connection between radio transmitters and data stream construction and reconstruction, performed by baseband processor sections.

To cope with UMTS requirements as well as scalability and robustness of e.g. a node B, an efficient architectural design is necessary in order to implement compliant and performant node B, i.e., to define functional entities and their interaction.

This invention has the underlying problem of designing a scalable and robust base station, especially a W-CDMA node B system, with non-critical components, avoiding e.g. critical line length matching.

The problem is solved by a mobile communication base station apparatus comprising a plurality of radio transmission and/or reception sections and a plurality of baseband processing sections, such that the plurality of baseband processing sections are divided into stages, arranged in at least two consecutive stages, where each stage each comprising multiple baseband processing sections, the radio transmission and/or reception sections are connected to a first stage of the baseband processing sections connected to a radio transmission and/or reception section and other stages of the baseband processing sections are multistage-connected to the first stage of the baseband processing sections so that the baseband processing sections form a stage configuration of consecutive interconnected stages of baseband processing sections, where each baseband processing section comprises adding means, dropping means, and routing means for extraction and injection of data streams and routing the data streams through the stages. The mobile communication base station apparatus might be a W-CDMA NODE-B System and the adding and dropping means controlling the spreading and de-spreading according to code division multiple access. The transmission and/or reception sections might be decomposed into receiver modules and transmitter modules. And the baseband processing sections within one stage might be interconnected. The stage configuration is preferably a matrix configuration and the number of baseband processing sections in the stages of the baseband processing sections is constant. Said routing means might support load balancing on said interfaces by using corresponding interface connections. The mobile communication base station apparatus might comprising detection means for detecting defect baseband processing sections and said routing means might support fault tolerance by using routing paths avoiding said defect baseband processing sections.

The problem is further solved by a baseband processing section for use in a mobile communication base station apparatus, comprising a baseband-processing-section-to-baseband processing section interface for data streams transmitted and/or received between the baseband processing section and another baseband processing section, adding means for injecting additional data streams to received data stream, dropping means for extracting data streams from received data streams, and routing means for passing resulting data streams over said interface. The baseband processing section might comprising adding and dropping means controlling the spreading and de-spreading according to code division multiple access. And the baseband processing section might comprising baseband-processing-section-to-transmission-and/or-reception-sections-interface for data streams transmitted and/or received between the baseband processing section and transmission and/or reception sections.

In other words, as mentioned above the main functionality of a node B is to perform the air interface processing, i.e. channel coding and interleaving, rate adaptation, spreading, etc. Major components are radio transmitter sections responsible for receiving and transmitting the radio signal, i.e. generating (power amplifier) and receiving (receiver) by modulating (filter) and demodulating (filter) carriers. A second functional component are baseband processors, encoding and decoding, multiplexing and demultiplexing W-CDMA signals.

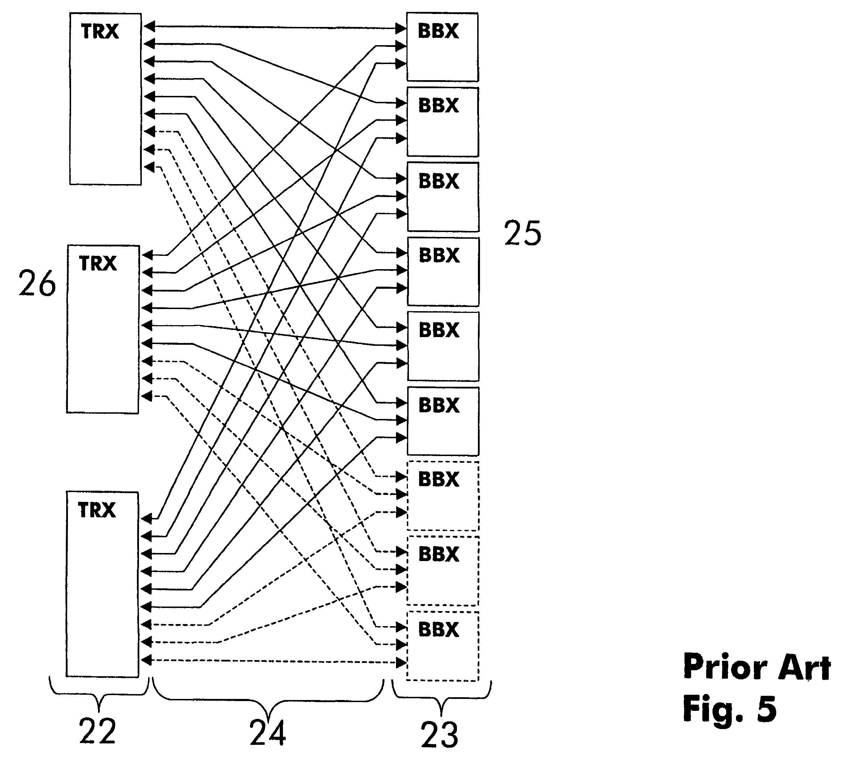

Full interface matrix configuration, shown in figure 5, is generally used, allowing multiple baseband processors to connect to one radio transmitter. However its implementation is of higher cost and complicated, e.g. with respect to critical line length matching. Huge, non-standard size back-planes, e.g. one backplane for two sub-racks, with critical line length matching are required. In addition both receiver and sender functions are split and realized by two separate sections, like a power amplifier and up-converter for a sender unit.

A scalable stage matrix interface configuration is proposed, using a comparable small backplane and cables to connect the sender and receiver sections with the baseband processors sections. By this it becomes possible to realize up-converter and power amplifier as one module and also to combine diplexer filter and down-converter in one module, as well as avoiding the critical line length matching interface between baseband processors and radio transmitter.

Several baseband processors modules are grouped into stages. The baseband processors aggregating board data and stage-to-stage data streams, allowing a smooth adding and dropping of data streams and a balanced routing through the proposed stage connection network.

The first stage serves the radio transmitters and radio receivers. This system decomposition avoid critical line length matching and could be realized using passive components and standard back-plane with non critical line length matching, and Cat-5 cable, i.e. 100 ohm unshielded twisted pair UTP cables characterized to 100 MHz, supporting applications up to 100 Mbps.

The stage interface could for instance consist of stages holding 3 baseband modules. The first stage is interfacing to the radio transmitter. Each stage is interconnected to the next stage by a complete mesh. Preferably, in addition to these interfaces, the baseband processing sections in the first stage are interconnected via inter-stage interface. Baseband processors in the following stages have stage-to-stage interfaces to the preceding stage and to the succeeding stage. A radio transmitter might select among three inter-connections to connect the first stage. Hence, instead full-matrix interface configuration between radio transmitter and baseband processors, the functionality is distributed over the multistage-connected baseband processing sections.

Accordingly, it is an object and advantage of the present invention to provide an scalable base station apparatus, in particular to a scalable W-CDMA NODE-B System, with baseband modules interfacing to radio-transmitter modules avoiding wiring concentration and critical line length matching. This yields e.g. to simplification of mother boards and small equipment size, and enables a compact and clear design, e.g. one section for each radio transceiver and radio transmitter functionality and a reduction back-plane board complexity.

Another advantage of the present invention is that the invention provides an base station apparatus with non-critical interfaces between baseband processors and radio unit which is flexible scalable.

A further advantage of the present invention is that the base station cold be implemented using low cost standard components.

Yet another advantage of the present invention is the enhanced flexibility, scalability, and robustness of a base station apparatus due to robust and mature standard components. The design allows redundancy mechanisms increasing the maturity and robustness.

These and many other objects and advantages of the present invention will become apparent to those of ordinary skill in the art from a consideration of the drawings and ensuing description.
**Figure. 1** is a schematic drawing of a part of a prior art UMTS terrestrial radio access network.
**Figure. 2** is a schematic drawing of components of a mobile communication base station apparatus according to the invention.
**Figure. 3** is a schematic drawing of the physical implementation of the baseband processing section radio transmitter interface of a mobile communication base station apparatus according to the invention.
**Figure. 4** is a schematic drawing of a preferred baseband processing section radio transmitter interface matrix configuration in a mobile communication base station apparatus according to the invention.
**Figure. 5** is a schematic drawing of conventional example baseband processing section radio transmitter interface of a mobile communication base station according to prior art.
**Figure. 6** is a schematic drawing of baseband processing section according to the invention.
**Figure. 7** to **Figure 12** are schematic drawings of variants of baseband processing section radio transmitter interface configurations of a mobile communication base station according to the invention.

**Figure. 1** shows a part of a prior art UMTS terrestrial radio access network 10, comprising node Bs 1,2,3, and RNCs 4,5. The node Bs are have associated antennas, forming one end of the user equipment air interface Uu 6. Node Bs 1, 2, 3 are interconnected with RNCs 4, 5 via the luB interface 7, and the RNCs 4, 5 are interconnected via the lur interface 8. The RNCs 4, 5 interfacing the core network via the lu interface 9. The figure illustrates as decried in the introductory part the role of a node B as mediating element between air interface Uu 6 and the RNC interface lub 7.

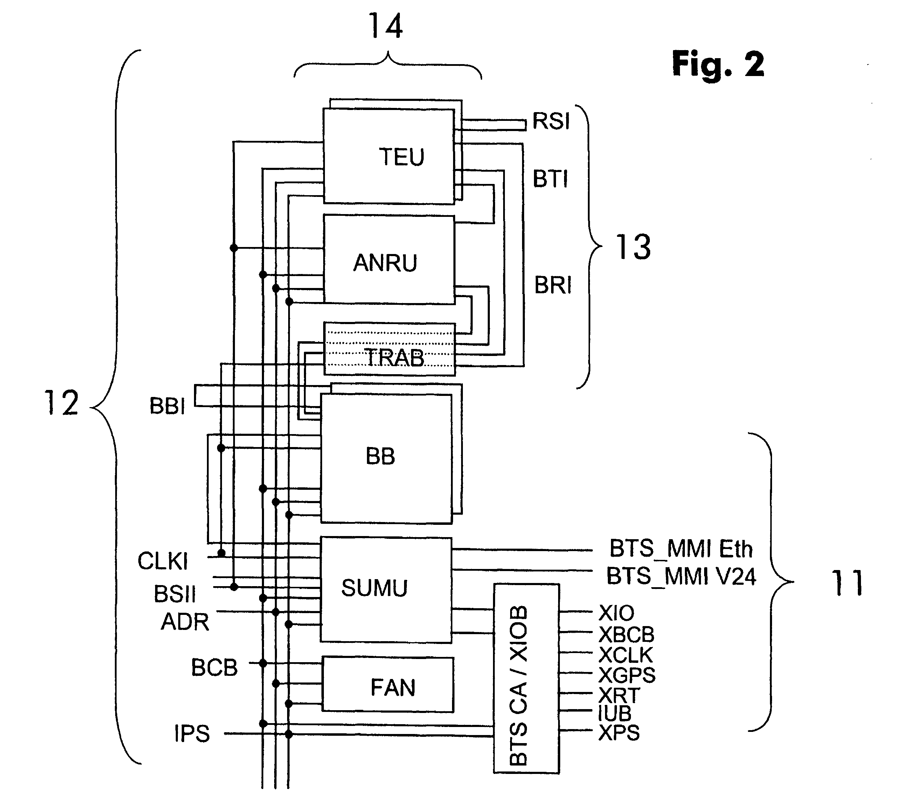

**Figure. 2** illustrates components of a mobile communication base station, comprising interfaces 12, 13 between (internal) components 14, as well as external interfaces 11. The shown node B comprises the following components 14: a connection area BTS CA / XIOB, a station unit module universal SUMU, baseband boards BB, a transition adapter board TRAB, an antenna receiver unit ANRU, and transmitter equipment for UMTS TEU. The external interfaces 11 comprising, e.g. a BTS man machine interface BTS_MMI Eth, and BTS_MMI V24, as well as XIO, XBXB XCLK XGPS, XRT, IUB, and XPS, etc.

A back plane interface 12 comprises a base station control bus BCB, a physical internal addressing bus ADR, a base station internal interface BBII, an internal data clock CLKI, and baseband board to baseband board interfaces BBI.

A second Interface 13 between baseband boards BB and antenna receiver unit ANRU, as well as transmitter equipment for UMTS TEU, via the transition adapter board TRAB, comprising a radio synchronization interface RSI, a baseband transmitter interface BTI, and a baseband receiver interface BRI.

The digital internal interfaces of this NodeB are based on e.g. synchronous serial buses. The clocks and frame signals are distributed as buses to the baseband boards BB and as point-to-point connections to antenna receiver unit ANRU, as well as transmitter equipment for UMTS TEU . This essential component interface is realized according to the invention.

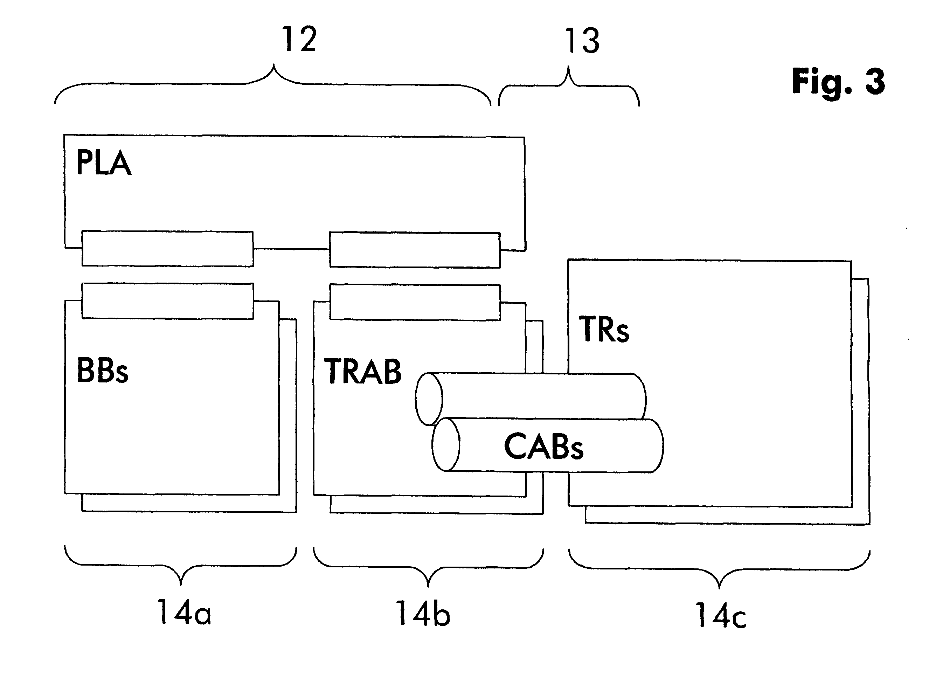

**Figure. 3** illustrates the physical realization of the baseband processing section to transmission and reception section. The figure shows baseband boards BBs, transceiver boards TRs (an abstraction from the antenna receiver unit ANRU, as well as transmitter equipment for UMTS TEU in the figure 2.), the transition adapter board TRAB, and a backplane board PLA realizing the backplane interface(s) 12.

The baseband boards BB are interconnected and are connected with the transition adapter board TRAB via a back plane board PLA. The transition adapter board TRAB is wired by cables CABs with the transceiver boards TRs, realizing the second interface(s) 13.

The figure illustrates by showing the connection components, namely cables CABs and a backplane board PLA the de-coupling of the radio part and the baseband processing part in this node B construction.

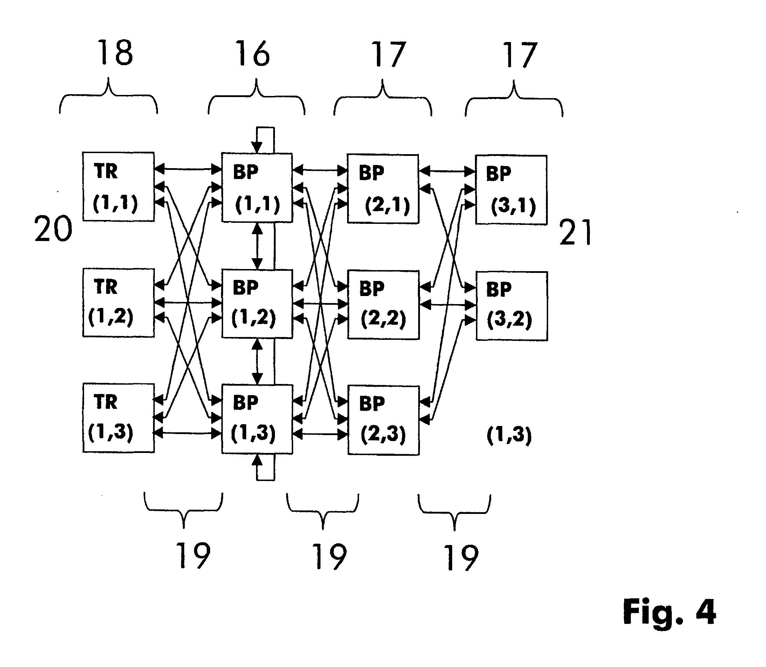

**Figure. 4** shows the preferred realization of the baseband processing section and transmission and reception section configuration. There are transmission and/or reception sections 20 and baseband processing sections 21. The transmission and/or reception sections are grouped into a transceiver stage 18 of three sections. The baseband processing sections are grouped into a first stage 16 and into further stages 17, each comprising three baseband processing sections 21, except the last one. The consecutive first and the further stages 16, 17 are meshed, preferably by a complete mesh. The baseband processing sections in the first stage 16 are interconnected, too. And the first stage 16 is meshed with the transceiver stage 18.

**Figure. 5** shows a conventional prior art example of a mobile communication base station apparatus. A plurality 23 of baseband boards (BBX) 25 which perform signal processing for respective user terminals in the mobile communication base station are connected to a further plurality 22 of complex radio transmission and reception sections (TRX) 22, so as to form complete bipartite graph of N x M connections 24. Though the configuration allows signal relief under simple control at a board failure time, it is necessary to set a wiring density between TRX 26 and BPX 25 to be high and preliminarily prepare adders or the like so as to correspond to the number of BPs to be added on. When the number of BPs is limited, efficiency is reduced. Hence, a configuration with lower wiring density between TRs and BPs provides a better scalability and extensibility.

Comparing the design shown in figure 4 with the prior art shown in figure 5, baseband processing sections are configured in a matrix of m (columns; stage) x n (rows) in connection between transmitter and receiver sections 20 and baseband processing sections 21. In order to allow such a stage configuration, a routing and addition processing function is provided in the baseband processing sections 21.

An extension of baseband processing sections 21 is performed by additional rows. In this case, in order to achieve sector-free and carrier-free configuration, connection between transmitter and receiver sections and the first stage 16 of baseband processing sections 21 may be a complete mesh connection or inter-connection may be made between the baseband processing sections in the first stage 16. Further, for decentralizing an amount of signal transmission between baseband processing sections, a full mesh connection 19 can be made between first and further stages 16, 17. Furthermore, for reducing the number of signals between transmitter and receiver sections 20 and the baseband processing sections 21 in the first stage 16, the transmitter and receiver sections 20 may be configured in a matrix, too. Further, at a time of baseband processing section failure or at a time of maintenance, the sections may have a rerouting capabilities for relieving a route for the failed section.

Accordingly wiring concentration can be avoided, and since the number of input ports of transmitter and receiver sections is fixed, extensibility is improved.

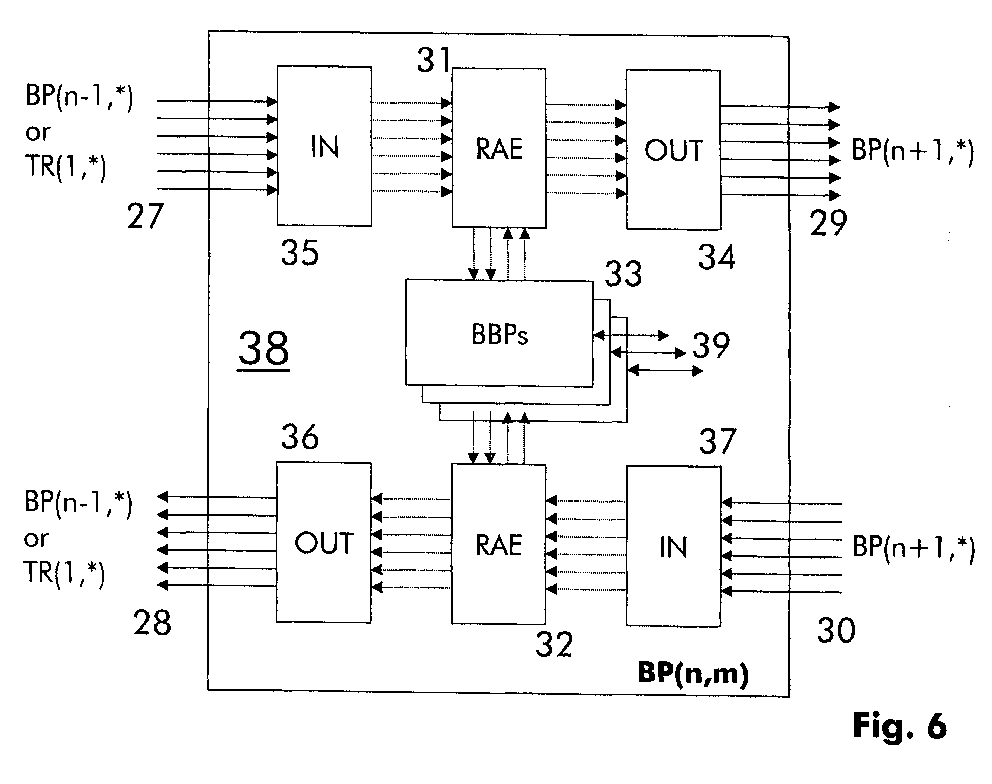

**Figure 6.** shows a single baseband processing section 38, the m-th baseband processing section 38 in the n-th stage with an user data stream interface 39. The baseband processing section 38 comprises two routing and add/drop units 31, 32, several baseband processing units 33 and input and output interfaces 34, ..., 37.

The upper input interface 35 together with the upper output interface 34 and the upper routing and add/drop unit 31 support a data stream form left to right, i.e. coming from the n-1 th baseband processor section stage or from the transition and receiving section, to the n+ 1 baseband processor section stage. Correspondingly the lower input interface 37 together with the lower output interface 36 and the lower routing and add/drop unit 32 support a data stream from right to left, i.e. coming from the n+ 1 th baseband processor section stage to the n-1 baseband processor section stage or to the transition and receiving section. Inter-stage connections might be supported analogously.

The routing and add/drop units 31, 32 are capable of injecting baseband data resulting from baseband processing units 33. Correspondingly, the routing and add/drop units 31, 32 are capable of extracting data streams for the baseband processing units 33. Further the routing and add/drop units 31, 32 are passing the resulting data streams.

The routing might be controlled for invalidating a signal processing performed by a failure or fault baseband processing section 35 or baseband processing unit 33 or even a transmitter and/or receiving section or a baseband processing section 38 to be subjected to maintenance (at a failure or fault time, or reconfiguration). The control might even support a reallocation of associated users for fault tolerance reasons.

Further the routing is controlled in order to balance load or to cope with additional constraints, e.g. timing and synchronization.

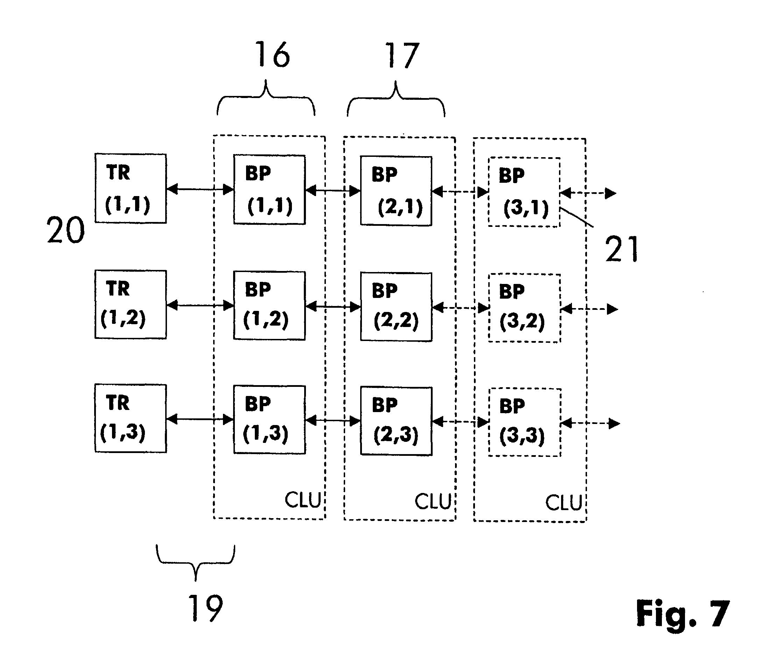

Figure. 7 shows when the number of transmitter and receiver sections 20 is three. Nine baseband processing sections 21 are stage - wise configured, three in one stage 17, i.e., [3] x [3,3,3]. Adding further stages 17 of additional baseband processing sections 21 does not influence the number of connections between baseband processing sections 21 and transmitter and receiver sections 20, since the additional sections are connected in a multistage manner, as shown with a dotted lines. As illustrated, by handling baseband processing sections 21 as a stage of a vertical line, connection between transmitter and receiver sections 20 and baseband processing sections 21 can be achieved by only connection 19 to the first stage 16. Further, by multistage-connecting stages in a horizontal line, extension is made possible.

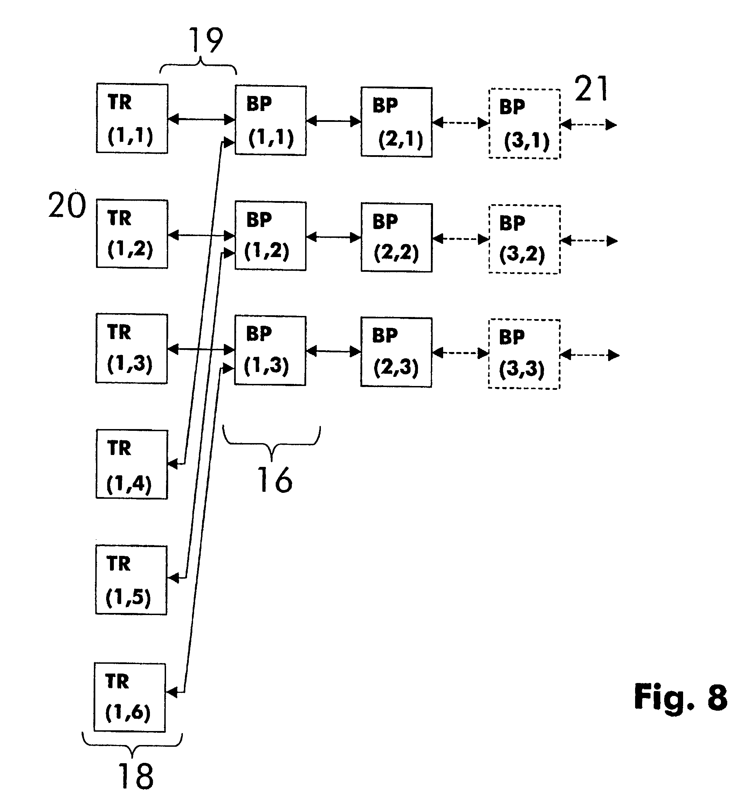

**Figure. 8** shows another interface configuration, [6]x[3,3,3]. Though the number of transmitter and receiver sections 20 in the transceiver stage 18 might be greater than the number of interfacing baseband processing sections 21 in the first stage 16, e.g. for safety reasons.

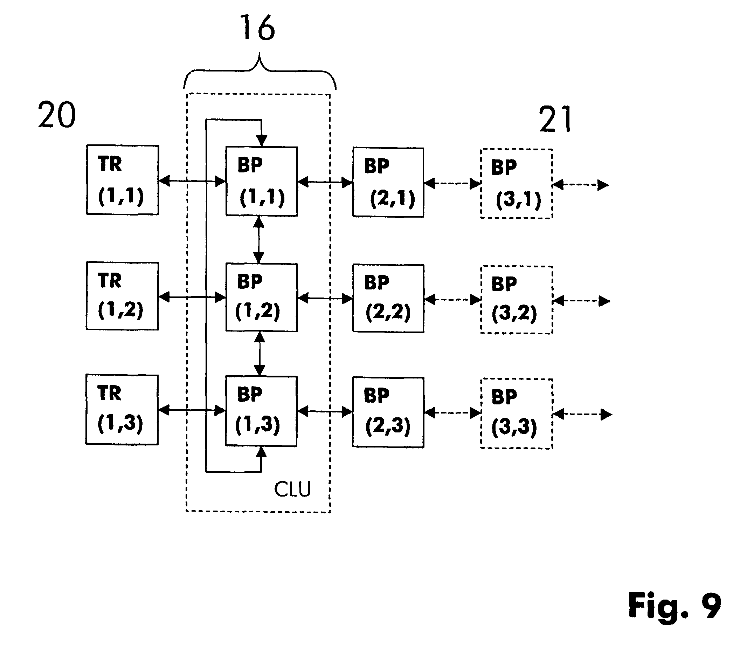

**Figure. 9** shows a further interface configuration. In order to allow transmission/reception sector-free or carrier-free base station configurations, the signals between all baseband processing sections 21 and all transmitter and receiver sections 20, the baseband processing sections 21 in the first stage 16 are inter-connected. Hence there are paths between every baseband processing section 21 and every transmitter and receiver section 20.

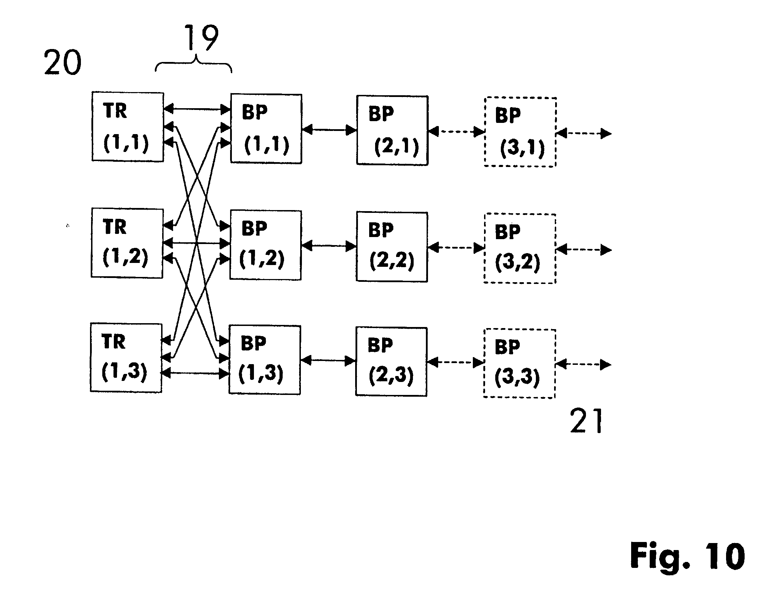

**Figure. 10** shows an alternative interface configuration to the interface configuration shown in figure 9. Connection between transmitter and receiver sections 20 and baseband processing sections 21 in the first stage 16 of is implemented by a complete mesh 19. Hence there are also paths between every baseband processing section 21 and every transmitter and receiver section 20.

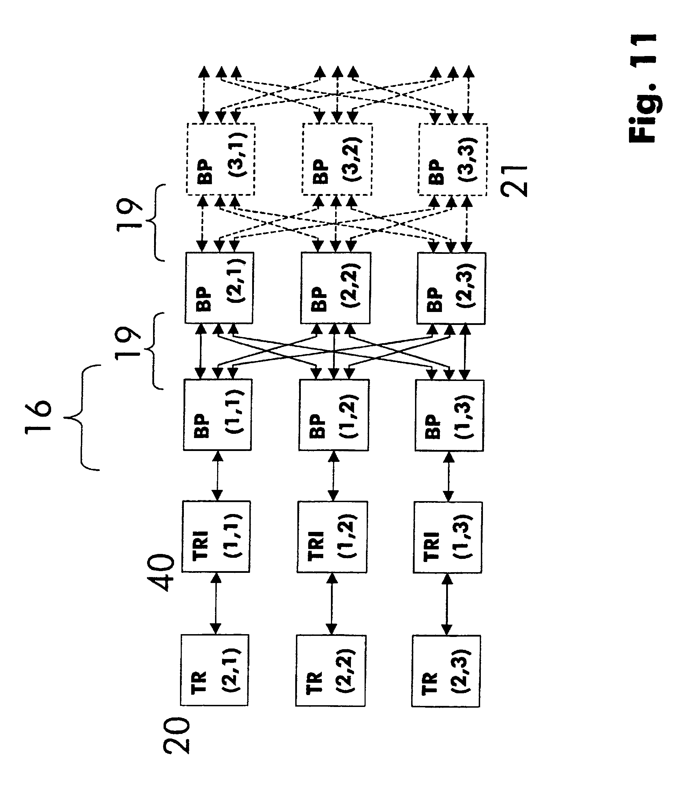

**Figure. 11** shows an interface configuration with complete mesh connections between baseband processing section 21 in successive stage is performed for a similar purpose. In this case, though an amount of signal transmission between baseband processing section 21 in the first stage 16 increases, baseband processing section to baseband processing section connection can be made in each stage sequent to stage in order to avoid concentration. The connections 19 further support additional redundancy for re-routing over alternative paths.

The complete mesh between stages of baseband processing sections allows to decentralize or distribute the amount of signal transmission. Furthermore additional interfacing sections for the transmitter and receiver sections are added.

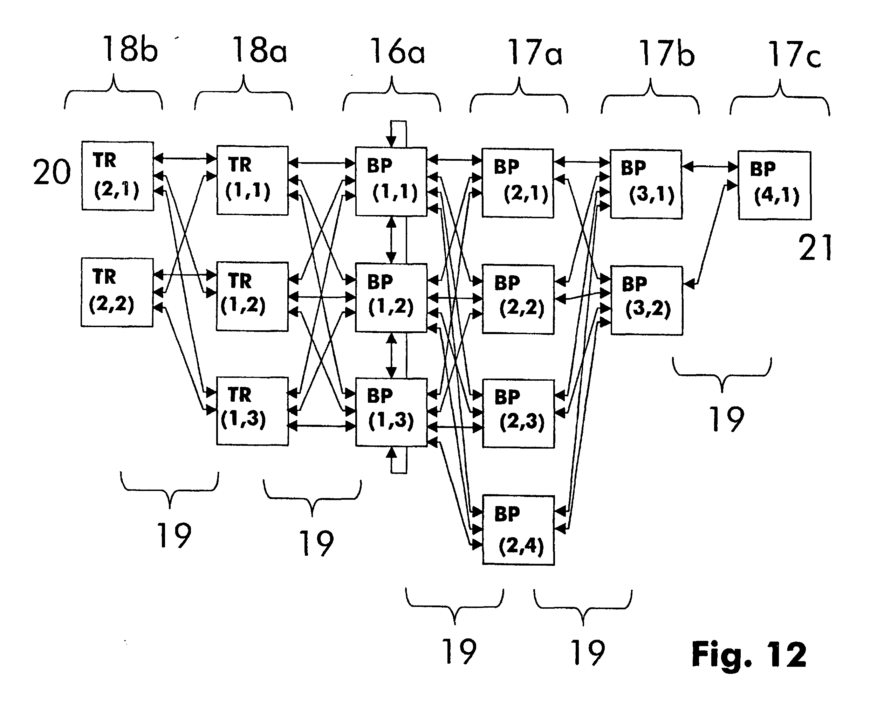

**Figure. 12** shows a more complex configuration, namely [2,3]x[3,4,2,1], comprising of a first transmitter stage 18b, and a second and last transceiver stage 18a, as well as a first baseband processing section stage 16a, a second one stage 17a, a third stage 17b, and a fourth stage 17c forming. Although not necessary, the connections 19 are complete meshes.

The configuration comprises multi-staged transmitter and receiver sections 20, transmitter and receiver sections side employs a complex configuration, too, in order to avoid that the number of the matrix connections between transmitter and receiver sections 20 and the first stage 16a of baseband processing section 21 becomes vast. Thereby, it becomes possible to reduce the number connections and a load balancing between transmitter and receiver sections 20 and baseband processing section 21 as well as a load balancing for both sides.

## Claims

1. A mobile communication base station apparatus comprising a plurality of radio transmission and/or reception sections (20) and a plurality of baseband processing sections (21, 38) comprising a user data stream interface (39), the plurality of baseband processing sections (21, 38) is arranged in a first stage (16, 16a) comprising baseband processing sections (21, 38) connected to radio transmission and/or reception sections (20), each radio transmission and/or reception section (20) is connected to at least one baseband processing section (21, 38), **characterized in that**
- the plurality of baseband processing sections (21, 38) is divided into stages (16, 16a, 17, 17a, 17b, 17c), arranged in said first stage (16, 16a) and further stages (17, 17a, 17b, 17c),
- each stage (16, 16a, 17, 17a, 17b, 17c) comprising at least one baseband processing section (21, 38) of said plurality of baseband processing sections (21, 38), and
- each baseband processing section (21, 38) of the further stages (17, 17a, 17b, 17c) is connected with at least one baseband processing unit (21, 38) in any preceding stage, such that the baseband processing sections (21, 38) are multistage-connected to the first stage (16, 16a) of the baseband processing sections (21, 38), and
- each baseband processing section (21, 38) comprises adding means (31, 32), dropping means (31, 32), and/or routing means (31, 32) for extraction and injection of baseband data streams and, respectively routing the data streams through the stages (16, 16a, 17, 17a, 17b, 17c).

2. The mobile communication base station apparatus according to claim 1, **characterized in that** the base station is a W-CDMA NODE-B System and the adding and dropping means (31, 32) controlling the spreading and de-spreading according to code division multiple access.

3. The mobile communication base station apparatus according to claim 1, **characterized in that** the transmission and/or reception sections (20) are decomposed into receiver modules and transmitter modules.

4. The mobile communication base station apparatus according to claim 1, **characterized in that** baseband processing sections within one stage (16a) are interconnected.

5. The mobile communication base station apparatus according to claim 1, **characterized in that** the stage configuration is a matrix configuration and the number of baseband processing sections in the stages of the baseband processing sections is constant.

6. The mobile communication base station apparatus according to claim 1, **characterized in that** said routing means (31, 32) support load balancing on said interfaces by using corresponding interface connections.

7. The mobile communication base station apparatus according to claim 1, **characterized by** comprising detection means for detecting defect baseband processing sections and said routing means (31, 32) support fault tolerance by using routing paths avoiding said defect baseband processing sections.

8. A baseband processing section (21, 38) for use in a mobile communication base station apparatus, said baseband processing section (21, 38) belonging to a first stage (16, 16a) and comprising an interface (39) for user data streams and being
**characterized by** comprising a baseband-processing-section-to-baseband processing section interface (27, 28, 29, 30) for data streams transmitted and/or received between the baseband processing section (21, 38) belonging to the first stage (16, 16a) and one other baseband processing section (21, 38) belonging to another stage (17, 17a, 17b, 17c), adding means (31, 32) for injecting additional data streams to received data stream, dropping means (31, 32) for extracting data streams from received data streams, and routing means (31, 32) for passing resulting data streams over said baseband-processing-section-to-baseband processing section interface (27, 28, 29, 30).

9. The baseband processing section for use in a mobile communication base station apparatus according to claim 8, **characterized by** comprising adding and dropping means (31, 32) controlling the spreading and de-spreading according to code division multiple access.

10. The baseband processing section for use in a mobile communication base station apparatus according to claim 8, **characterized by** comprising baseband-processing-section-to-transmission-and/or-reception-sections-interface (19) for data streams transmitted and/or received between the baseband processing section (21, 38) and transmission and/or reception sections (20).

## Patentansprüche

1. Mobilfunkbasisstation mit einer Vielzahl von Funksende- und/oder Funkempfangsteilen (20) und einer Vielzahl von jeweils eine Benutzerdatenstromschnittstelle (39) aufweisenden Basisbandverarbeitungsteilen (21, 38), wobei die Vielzahl von Basisbandverarbeitungsteilen (21, 38) in einer ersten Stufe (16, 16a) angeordnet ist, welche mit Funksende- und/oder Funkempfangsteilen (20) verbundene Basisbandverarbeitungsteile (21, 38) umfasst, und wobei jedes Funksende- und/oder Funkempfangsteil (20) mit mindestens einem Basisbandverarbeitungsteil (21, 38) verbunden ist, **dadurch gekennzeichnet, dass**
- die Vielzahl von Basisbandverarbeitungsteilen (21, 38) in Stufen (16, 16a, 17, 17a, 17b, 17c) aufgeteilt sind, die als die erste Stufe (16, 16a) und weitere Stufen (17, 17a, 17b, 17c) angeordnet sind,
- jede Stufe (16, 16a, 17, 17a, 17b, 17c) mindestens ein Basisbandverarbeitungsteil (21, 38) der Vielzahl von Basisbandverarbeitungsteilen (21, 38) umfasst,
- jedes Basisbandverarbeitungsteil (21, 38) der weiteren Stufen (17, 17a, 17b, 17c) mit mindestens einer Basisbandverarbeitungseinheit (21, 38) in einer vorgeschalteten Stufe verbunden ist, so dass die Basisbandverarbeitungsteile (21, 38) mehrstufig mit der ersten Stufe (16, 16a) der Basisbandverarbeitungsteile (21, 38) verbunden sind, und
- jedes Basisbandverarbeitungsteil (21, 38) Add-Mittel (31, 32), Drop-Mittel (31, 32) und/oder Routing-Mittel (31, 32) zum Auskoppeln und Einspeisen von Basisbanddatenströmen bzw. zum Leiten der Datenströme durch die Stufen (16, 16a, 17, 17a, 17b, 17c) umfasst.

2. Mobilfunkbasisstation nach Anspruch 1, **dadurch gekennzeichnet, dass** die Basisstation ein W-CDMA-Knoten-B-System ist und dass die Add- und Drop-Mittel (31, 32) das Spreizen und Entspreizen nach dem Codemultiplexzugriffsverfahren steuern.

3. Mobilfunkbasisstation nach Anspruch 1, **dadurch gekennzeichnet, dass** die Sende- und/oder Empfangsteile (20) in Empfängermodule und Sendermodule aufgegliedert sind.

4. Mobilfunkbasisstation nach Anspruch 1, **dadurch gekennzeichnet, dass** Basisbandverarbeitungsteile innerhalb einer Stufe (16a) miteinander verbunden sind.

5. Mobilfunkbasisstation nach Anspruch 1, **dadurch gekennzeichnet, dass** die Stufenkonfiguration eine Matrixkonfiguration ist und dass die Anzahl der Basisbandverarbeitungsteile in den Stufen der Basisbandverarbeitungsteile konstant ist.

6. Mobilfunkbasisstation nach Anspruch 1, **dadurch gekennzeichnet, dass** die Routing-Mittel (31, 32) eine Lastverteilung auf den Schnittstellen durch Verwendung von entsprechenden Schnittstellenverbindungen unterstützen.

7. Mobilfunkbasisstation nach Anspruch 1, **dadurch gekennzeichnet, dass** sie Erkennungsmittel zum Erkennen von fehlerhaften Basisbandverarbeitungsteilen umfasst und dass die Routing-Mittel (31, 32) die Fehlertoleranz durch Benutzung von die fehlerhaften Basisbandverarbeitungsteile meidenden Leitwegen unterstützen.

8. Basisbandverarbeitungsteil (21, 38) zur Verwendung in einer Mobilfunkbasisstation, welches zu einer ersten Stufe (16, 16a) gehört und eine Schnittstelle (39) für Benutzerdatenströme umfasst, **dadurch gekennzeichnet, dass** es eine Basisbandverarbeitungsteil-Basisbandverarbeitungsteil-Schnittstelle (27, 28, 29, 30) für zwischen dem zu der ersten Stufe (16, 16a) gehörenden Basisbandverarbeitungsteil (21, 38) und einem anderen, zu einer anderen Stufe (17, 17a, 17b, 17c) gehörenden Basisbandverarbeitungsteil (21, 38) übertragene Datenströme, Add-Mittel (31, 32) zum Einfügen zusätzlicher Datenströme in den empfangenen Datenstrom, Drop-Mittel (31, 32) zum Auskoppeln von Datenströmen aus den empfangenen Datenströmen und Routing-Mittel (31, 32) zum Leiten resultierender Datenströme über die Basisbandverarbeitungsteil-Basisbandverarbeitungsteil-Schnittstelle (27, 28, 29, 30) umfasst.

9. Basisbandverarbeitungsteil zur Verwendung in einer Mobilfunkbasisstation nach Anspruch 8, **dadurch gekennzeichnet, dass** es Add- und Drop-Mittel (31, 32) umfasst, die das Spreizen und Entspreizen nach dem Codemultiplexzugriffsverfahren steuern.

10. Basisbandverarbeitungsteil zur Verwendung in einer Mobilfunkstation nach Anspruch 8, **dadurch gekennzeichnet, dass** es Basisbandverarbeitungsteil-Sende- und/oder Empfangsteil-Schnittstellen (19) für zwischen dem Basisbandverarbeitungsteil (21, 38) und Sende- und/oder Empfangsteilen übertragene Datenströme umfasst.

## Revendications

1. Station de base dans un système de communication mobile comprenant une pluralité de parties de transmission et/ou de réception radio (20) et une pluralité de parties de traitement de bande de base (21, 38) comprenant une interface de flux de données utilisateur (39), la pluralité de parties de traitement de bande de base (21, 38) est agencée dans un premier étage (16, 16a) comprenant des parties de traitement de bande de base (21, 38) connectées aux parties de transmission et/ou de réception radio (20), chaque partie de transmission et/ou de réception radio (20) est connectée à au moins une partie de traitement de bande de base (21, 38), **caractérisée en ce que**
- la pluralité de parties de traitement de bande de base (21, 38) est divisée en étages (16, 16a, 17, 17a, 17b, 17c), qui sont agencés dans ledit premier étage (16, 16a) et d'autres étages (17, 17a, 17b, 17c),
- chaque étage (16, 16a, 17, 17a, 17b, 17c) comprenant au moins une partie de traitement de bande de base (21, 38) de ladite pluralité de parties de traitement de bande de base (21, 38), et
- chaque partie de traitement de bande de base (21, 38) des autres étages (17, 17a, 17b, 17c) est connectée à au moins une des unités de traitement de bande de base (21, 38) dans n'importe quel étage précédant, si bien que les parties de traitement de bande de base (21, 38) sont connectées de façon multi étagée au premier étage (16,16a) des parties de traitement de bande de base (21, 38), et
- chaque partie de traitement de bande de base (21, 38) comprend des moyens d'addition (31, 32), des moyens de réduction (31, 32), et/ou des moyens de routage (31, 32) en vue de l'extraction et de l'injection de flux de données de bande de base et, respectivement du routage des flux de données à travers les étages (16, 16a, 17, 17a, 17b, 17c).

2. Station de base dans un système de communication mobile selon la revendication 1, **caractérisée en ce que** la station de base est un système AMRC à large bande, et les moyens d'addition et de réduction (31, 32) contrôlent la dispersion et la non-dispersion selon un accès multiple par répartition en code.

3. Station de base dans un système de communication mobile selon la revendication 1, **caractérisée en ce que** les parties de transmission et/ou de réception (20) sont décomposées en modules de réception et en modules de transmission.

4. Station de base dans un système de communication mobile selon la revendication 1, **caractérisée en ce que** les parties de traitement de bande de base à l'intérieur d'un étage (16a) sont connectées entre elles.

5. Station de base dans un système de communication mobile selon la revendication 1, **caractérisée en ce que** la configuration étagée est une configuration à matrice et le nombre de parties de traitement de bande de base dans les étages des parties de traitement de bande de base est constant.

6. Station de base dans un système de communication mobile selon la revendication 1, **caractérisée en ce que** lesdits moyens de routage (31, 32) supportent l'équilibrage des charges sur lesdites interfaces en utilisant des connexions d'interface correspondantes.

7. Station de base dans un système de communication mobile selon la revendication 1, **caractérisée en ce qu'**elle comprend des moyens de détection pour détecter des parties de traitement de bande de base défectueuses, et lesdits moyens de routage (31, 32) supportent une tolérance aux pannes en utilisant des voies de routage qui évitent lesdites parties de traitement de bande de base défectueuses.

8. Partie de traitement de bande de base (21, 38) destinée à être utilisée dans une station de base dans un système de communication mobile, ladite partie de traitement de bande de base (21, 38) appartenant à un premier étage (16, 16a) comprenant une interface (39) pour des flux de données utilisateur et **caractérisée en ce qu'**elle comprend une interface de partie de traitement de bande de base à partie de traitement de bande de base (27, 28, 29, 30) pour les flux de données transmis vers et/ou reçus entre la partie de traitement de bande de base (21, 38) appartenant au premier étage (16, 16a) et une autre partie de traitement de bande de base (21, 38) appartenant à un autre premier étage (17, 17a, 17b, 17c), des moyens d'addition (31, 32) pour injecter d'autres flux de données aux flux de données reçus, des moyens de réduction (31, 32) pour extraire des flux de données à partir de flux de données reçus, et des moyens de routage (31, 32) pour transmettre les flux de données ainsi obtenus par l'intermédiaire de l'interface de partie de traitement de bande de base à partie de traitement de bande de base (27, 28, 29, 30).

9. Partie de traitement de bande de base destinée à être utilisée dans une station de base dans un système de communication mobile selon la revendication 8, **caractérisée en ce qu'**elle comprend des moyens d'addition et des moyens de réduction (31, 32) qui contrôlent la dispersion et la non-dispersion selon un accès multiple par répartition en code.

10. Partie de traitement de bande de base destinée à être utilisée dans une station de base dans un système de communication mobile selon la revendication 8, **caractérisée en ce qu'**elle comprend une interface de partie de traitement de bande de base à parties de transmission et/ou de réception (19) pour des flux de données transmis vers et/ou reçus entre la partie de traitement de bande de base (21, 38) et les parties de transmission et/ou de réception (20).
